Europäisches Patentamt

European Patent Office

Office européen des brevets

(11) Veröffentlichungsnummer: **0 412 056 A1**

# (12) EUROPÄISCHE PATENTANMELDUNG

(21) Anmeldenummer: 90810581.0

(22) Anmeldetag: 01.08.90

(51) Int. Cl.5: **H02H 3/44**

(30) Priorität: 03.08.89 CH 2868/89

(43) Veröffentlichungstag der Anmeldung:
06.02.91 Patentblatt 91/06

(84) Benannte Vertragsstaaten:
**AT CH DE DK FR GB IT LI SE**

(71) Anmelder: **CMC Carl Maier + Cie AG**
**Fulachstrasse 150**
**CH-8201 Schaffhausen(CH)**

(72) Erfinder: **Mettler, Roland K.**
**Rütiweid 6**

**CH-6340 Baar(CH)**
Erfinder: **Grüninger, Klaus**
**Plörenstrasse 5**
**D-7709 Hilzingen(DE)**
Erfinder: **Wohlwend, Michael**
**Birchweg 49**
**CH-8201 Schaffhausen(CH)**

(74) Vertreter: **Breiter, Heinz**
**Patentanwalt H. Breiter AG**
**Schaffhauserstrasse 27 Postfach 1163**
**CH-8401 Winterthur(CH)**

(54) **Elektronische Sicherheitsschaltung.**

(57) Die elektronische Sicherheitsschaltung (208) mit einem Relaiskontakt (201) dient dem Unterbrechen eines elektrischen Wechselstromleiters (211) beim Ueberschreiten eines wählbar festgelegten Grenzwerts. Die Sicherheitsschaltung (208) wird von einer Spannungsregelung gespeist.

Die Sicherheitsschaltung (208) umfasst Mittel zum Oeffnen des Relaiskontaktes (201) bei einem schnellen Anstieg des errechneten oder gleichgerichteten Mittelwerts des Stroms, auch unterhalb des Grenzwerts. Beim Einschalten des Geräts überbrückt ein Prozessor mit Software oder eine Reset-schaltung die erwähnten Mittel.

Eine elektronische Sicherheitsschaltung (208) mit einem Prozessor speichert den Ausschaltwert für den errechneten Mittelwert des Stroms und vergleicht ihn mit dem Einschaltmesswert.

Die elektronische Sicherheitsschaltung (208) eignet sich insbesondere zur primärseitigen Unterbrechung einer Transformatorleitung, wobei ein Stromwandler (206) bevorzugt den Trafo-Sekundärstrom erfasst.

Fig. 1

## ELEKTRONISCHE SICHERHEITSSCHALTUNG

Die Erfindung bezieht sich auf eine elektronische Sicherheitsschaltung mit einem Relaiskontakt zum Unterbrechen eines elektrischen Wechselstromleiters beim Ueberschreiten eines wählbar festgelegten Grenzwertes, wobei die Sicherheitsschaltung von einer Spannungsregelung gespeist ist. Weiter bezieht sich die Erfindung auf ein Verfahren zum Betrieb und die Verwendung einer Sicherheitsschaltung.

Beispielsweise in Niedervolt (NV)-Beleuchtungsanlagen, welche von 12 Volt-Wechselspannung gespeist werden, kann auf den Schutz gegen direktes Berühren verzichtet werden. Es ist bekannt, solche nicht isolierte Leitungen mit Ueberstrom-Schutzorganen zu schützen, wenn ein elektrisch leitender Gegenstand einen teilweisen oder vollständigen Kurzschluss verursacht. Konventionelle Sicherungen vermögen die NV-Anlage bei einem vollstandigen Kurzschluss sofort oder verzögert abzuschalten, bei einem lediglich teilweisen Kurzschluss dagegen wird der Trafo stark belastet, ohne den abschaltenden Grenzwert zu erreichen.

Mit einem bekannten Gerät wird deshalb versucht, die Nachteile von lediglich mit einer Primärsicherung ausgerüsteten Transformatoren zu beheben. Eine bei Ueber- und Unterbelastung ansprechende NV-Sicherung kann mit einer Grobeinstellung an die angeschlossene Sekundärlast angepasst werden. Ausserhalb einer bestimmten Schaltbandbreite stellt die Anlage automatisch ab. Damit soll sichergestellt werden, dass die Trafoleistung nicht wesentlich über- oder unterschritten wird.

Obwohl mit diesem Gerät gegenüber ausschliesslich mit einer Primärsichung ausgerüsteten Anlagen eine Verbesserung erzielt werden kann, bleiben zwei Nachteile bestehen:
- Es wird vorausgesetzt, dass der Anwender die Bandbreite richtig einstellt. Tut er dies nicht, sind Störungen die Folge.
- Aenderungen an der Sekundärlast, welche innerhalb der eingestellten Bandbreite bleiben, können nicht zu einer Abschaltung führen.

Die Erfinder haben sich die Aufgabe gestellt, eine elektronische Sicherheits- bzw. Schutzschaltung der eingangs genannten Art zu schaffen, welche einen elektrischen Wechselstromleiter nicht nur bei einer durch einen teilweisen oder vollständigen Kurzschluss bedingten Ueberschreitung eines Grenzwerts abschaltet, sondern auch bei der Erzeugung eines teilweisen Kurzschlusses ohne Ueberschreitung des Grenzwerts für die Abschaltung.

In bezug auf die Vorrichtung wird die Aufgabe erfindungsgemäss dadurch gelöst, dass die Sicherheitsschaltung Mittel zum Oeffnen des Relaiskontaktes bei einem festgelegten schnellen Anstieg des errechneten oder gleichgerichteten Mittelwertes des Stroms auch unterhalb des Grenzwerts umfasst, wobei ein Prozessor oder eine Resetschaltung die erwähnten Mittel beim Einschalten des elektrischen Stroms überbrückt. Spezielle Ausführungsformen und Weiterausbildungen sind Gegenstand von abhängigen Patentansprüchen.

Die Sicherheitsschaltung ist bei geregeltem Betrieb über einen Dimmer zur Regelung der über die Relaiskontakte geführten Netzspannung oder bei ungeregeltem Betrieb über einen Anlageschalter an das Netz angeschlossen.

Ein schneller Anstieg des errechneten Mittelwerts bzw. des Effektivwerts des Stroms wird durch einen vollständigen oder teilweisen Kurzschluss zwischen zwei nicht isolierten Leitern erzeugt, beispielsweise durch ein Kleidungsstück, welches mit einem Reissverschluss auf die Seile einer NV- Halogenlampenbeleuchtung gelegt wird.

Im erwähnten Fall der NV-Beleuchtungsanlage wird die Sicherheitsschaltung vorzugsweise an der Primärseite angelegt. Sie kann jedoch durchaus auch auf der Sekundärseite mit den blanken Leitern angelegt werden.

Weiter ist die erfindungsgemässe Sicherheitsschaltung geeignet, den Wechselstromleiter eines beliebigen Verbrauchers abzuschalten, z.B. auch von Haushaltgeräten. Bei dreiphasigen Leitern kann an jede Phase eine Sicherheitsschaltung angelegt werden. Beim Ausfall einer Phase führt der schnelle Stromanstieg in den beiden andern Phasen zu einer Abschaltung.

Die erfindungsgemässe Schutzschaltung erhöht nicht nur die Sicherheit dank einer, bei einem schnellen Anstieg des errechneten oder gleichgerichteten Mittelwerts des Stroms, unverzüglichen Abschaltung auch unterhalb der Ueberlastgrenze, sie verhindert dadurch auch einen unnötigen Stromverbrauch. Dies ist vor allem von Bedeutung, wenn die Ueberlastgrenze nicht oder nur langsam erreicht wird.

Zweckmässig ist die Sicherheitsschaltung so ausgestaltet, dass die Mittel den Relaiskontakt bei einem Anstieg des errechneten oder gleichgerichteten Mittelwerts des Stroms von wenigstens 1 A/sec betätigen. Vorzugsweise wird der Relaiskontakt jedoch erst bei wenigstens 10 A/sec betätigt, insbesondere bei wenigstens 30 A/sec. Die Ansprechgrenze für den Relaiskontakt ist frei wählbar. Sie ist lediglich durch den Benutzungskomfort begrenzt:
- Ist die Ansprechgrenze zu klein, wird der Strom bei unerwünschten, an sich unschädlichen Ereignissen unterbrochen. So ist beispielsweise bei NV-Beleuchtungsanlagen oft ein Dimmer im Primärleiter des Trafos eingebaut. Wird die Beleuchtungsstärke durch schnelles Drehen am Dimmerkopf verändert, schaltet die NV-Beleuchtungsanlage aus, wenn die erwähnte Ansprechgrenze niedrig eingestellt ist. Obwohl dies keine weitere Folgen hat, ist der Bedienungskonfort nicht wunschgemäss. Deshalb wird bei NV-Beleuchtungsanlagen üblicherweise eine Ansprechgrenze von etwa 30 A/sec eingestellt.

- Ist die Ansprechgrenze zu gross, bleibt eine Erhöhung des errechneten oder gleichgerichteten Mittelwerts des Stroms unterhalb des Grenzwerts ggf. unentdeckt.

Weiter ist es bezüglich des Bedienungskomforts vorteilhaft, eine Leuchtdiode so an die Sicherheitsschaltung anzuschliessen, dass diese beim Unterbrechen des elektrischen Leiters durch den Relaiskontakt aufleuchtet, vorzugsweise bis zum Ausschalten mittels eines vorgeschalteten Anlageschalters.

Nach einer ersten bevorzugten Ausführungs-form der elektronischen Sicherheitsschaltung um-fassen die Mittel zur Betätigung im wesentlichen ein Signale erzeugendes Messglied mit einem Verstärker und einem Gleichrichter, einen Prozessor mit Software und ein Relais mit einem Relaiskontakt. Dieser Prozessor wertet die Messignale aus.

Nach einer zweiten bevorzugten Ausführungs-form der elektronischen Sicherheitsschaltung um-fassen die Mittel zur Betätigung neben dem Signale erzeugendes Messglied im wesentlichen eine Signalaufbereitung mit einem Verstärker und einem Gleichrichter, einen Grenzwertbildner mit einem Spannungsfolger, einen Komparator für den Vergleich der von der Resetschaltung, dem Messglied und dem Grenzwertbildner erzeugten bzw. modifizierten Signale und ein Relais mit einem Relaiskontakt. Der Grenzwertbildner enthält dem Spannungsfolger vorgeschaltete, die verstärkten und gleichge-richteten Messignale verzögernde Bauteile, vor-zugsweise einen Wi derstand und einen an die Masse geschalteten Kondensator.

Bei jeder Stromeinschaltung entsteht ein schneller Anstieg des errechneten oder gleichgerichteten Mittelwerts des Stroms, welcher ohne entsprechende Massnahmen sofort wieder eine Ausschaltung bewirken würde. Eine bevorzugte Ausführungsform der Ueberbrückung umfasst einen Prozessor mit Software. Eine weitere bevorzugte Ausführungsform, eine Resetschaltung, umfasst einen Optokoppler mit direkt von der abschaltbaren Phase gespeisten Leuchtdioden und einem vom Spannungsregler gespeisten Phototransistor mit nachgeschaltetem Verstärker. Die erzeugten Signale werden einem Komparator zugeleitet, welcher die Wirkung des durch das Einschalten bedingten Stromanstiegs überbrückt.

Das Messglied ist vorzugsweise als Stromwandler ausgebildet, welcher auch Messwandler genannt wird. Dieser umgibt, spiralförmig entlang eines Rings gewickelt, den Wechselstromleiter. Der Stromwandler kann die Phase oder den Neutralleiter des Verbrauchers umfassen, bei einem Trafo auf der Primär- oder Sekundärseite. Die verstärkten Signale werden den erwähnten Prozessor oder Komparator zugeleitet.

Der Prozessor und der Komparator, welcher letztere die vom Stromwandler und von der Resetschaltung erzeugten Signale miteinander vergleicht, schalten bevorzugt einen seinerseits das Relais auslösenden Transistor.

In bezug auf das Verfahren wird die Aufgabe für eine elektronische Sicherheitsschaltung mit einem Prozessor erfindungsgemäss dadurch gelöst, dass die elektronische Sicherheitsschaltung den Ausschaltwert für den errechneten Mittelwert des Stroms speichert und mit dem Einschaltmesswert vergleicht. Mit andern Worten wird der Ausschaltmesswert gespeichert und dient beim erneuten Einschalten als neuer Grenzwert. Somit wird auch die ausgeschaltete Anlage überprüft.

Ein neuer Grenzwert kann eingestellt werden, indem eine Taste der elektronischen Sicherheitsschaltung betätigt wird.

Obwohl die erfindungsgemässe elektronische Sicherheitsschaltung jeden elektrischen Wechselstromleiter abschalten kann, auch die Sekundärseite eines Transformators, besteht eine bevorzugte Verwendung darin, eine primärseitige Transformatorleitung zu unterbrechen, wobei ein die Steuersignale erzeugender Stromwandler bevorzugt den Trafo-Sekundärstrom erfasst.

Nach einer besonders vorteilhaften Ausführungsform wird der Transformator zur Speisung von Niederspannungs-Halogenlampen verwendet, welche auf Schienen oder an Seilen bzw. Drähten ohne Isolation montiert sind. Wie bereits erwähnt, ergeben sich jedoch weitere interessante Verwendungsmoglichkeiten, z.B. in der Abschaltung von Haushaltgeräten.

Die Erfindung wird anhand von in der Zeichnung dargestellten Ausführungsbeispielen, welche auch Gegenstand von abhängigen Patentansprüchen sind, näher erläutert. Es zeigen schematisch:

- Fig. 1 eine Uebersicht einer Halogentrafo-Sicherheitsschaltung,
- Fig. 2 ein Blockschema der elektronischen Sicherheitsschaltung von Fig. 1, mit einem Prozessor,
- Fig. 3 ein Blockschema der elektronischen Sicherheitsschaltung von Fig. 1, mit einer Resetschaltung,
- Fig. 4 eine Sicherheitsschaltung gemäss Fig. 2 im Detail, und
- Fig. 5 ein Anschlussschema für eine Sicherheitsschaltung gemäss Fig. 2.

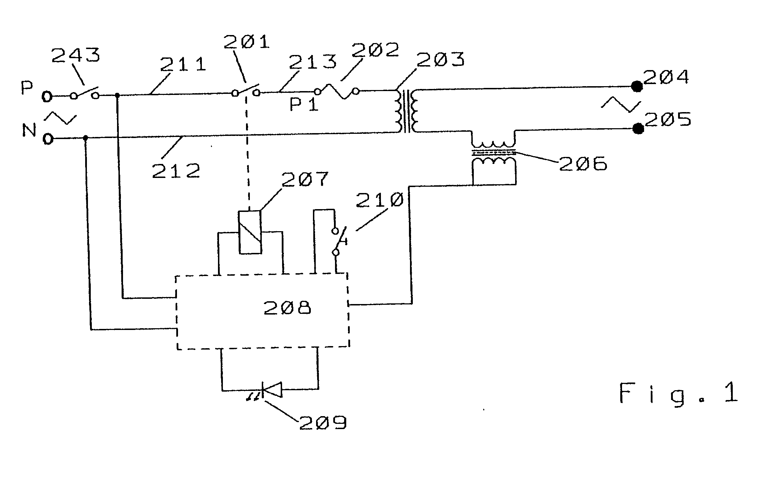

Das in Fig. 1 dargestellte Uebersichtsschema zeigt eine elektronische Sicherheitsschaltung 208 mit einem Relaiskontakt 201, welcher bei Betätigung den Wechselstromleiter 211 eines Transformators 203 unterbricht. Die Primärseite der Sicherheitsschaltung 208 wird an den Klemmen P und N mit Netzstrom von 220 VAC, nach einer in Fig. 1 nicht dargestellten Variante von einem Dimmer, gespeist.

Dem an der Phase P angeschlossenen Relaiskontakt 201 ist eine Sicherung, welche in der Hausinstallation angebracht sein kann, und ein Anlageschalter 243, welcher auch einen Dimmer umfassen kann, vorgeschaltet. Dem Relaiskontakt 201 ist weiter eine Sicherung 202 nachgeschaltet, welche auch im Trafo 203 angebracht sein kann.

Die elektronische Sicherheitsschaltung 208 ist über einen Leiter 211 an der Phase P oder am Dimmer und über einen Leiter 212 am Neutralleiter N angeschlossen.

Bei der Ansteuerung mit einem entsprechenden Signal zieht das Relais 207 an und bringt die Netzspannung an den Transformator 203. Die Transformatorenwicklungen sind so ausgelegt, dass sie auf der Sekundärseite einen Wechselstrom von 12 V erzeugen, welcher eine Leistung von z.B. 300 VA erbringen kann. Der Verbraucher wird an den Klemmen 204, 205 angeschlossen. Wenn dieser einen Anstieg oder Abfall eines vorausbestimmten, errechneten Mittelwerts des Stroms verursacht, erzeugt der Stromwandler 206 ein Signal, welches in der elektronischen Sicherheitsschaltung 208 verstärkt wird und bei vorgegebenen Bedingungen, insbesondere bei einem Stromanstieg, zur Auslösung des Relais 207 führt.

Bei geöffnetem Relaiskontakt 201, wie in Fig. 1 dargestellt, leuchtet eine Leuchtdiode 209, kurz auch LED genannt, auf, bis der Relaiskontakt 201 wieder geschlossen ist.

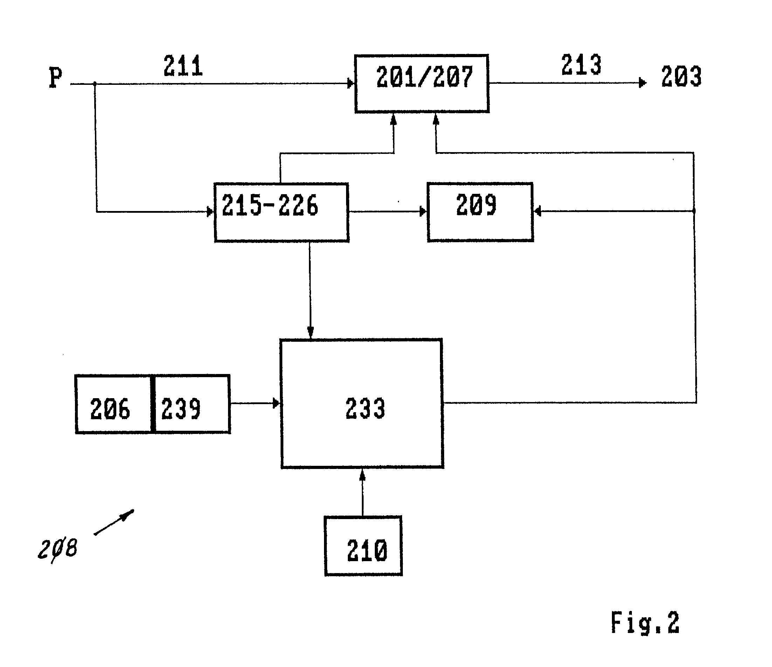

Im in Fig. 2 dargestellten Blockschaltbild der elektronischen Sicherheitsschaltung 208 von Fig. 1 ist die Phase P eines Wechselstromleiters 211 mit einem Relaiskontakt 201 abschaltbar. Der Wechselstromleiter 213 rechts des Relaiskontakts 201 führt zu einem Transformator 203 oder direkt zu einem nicht dargestellten Verbraucher. Im gezeigten Blockschaltbild umfassen die Wechselstromleiter 211,213 stets Phase und Neutralleiter.

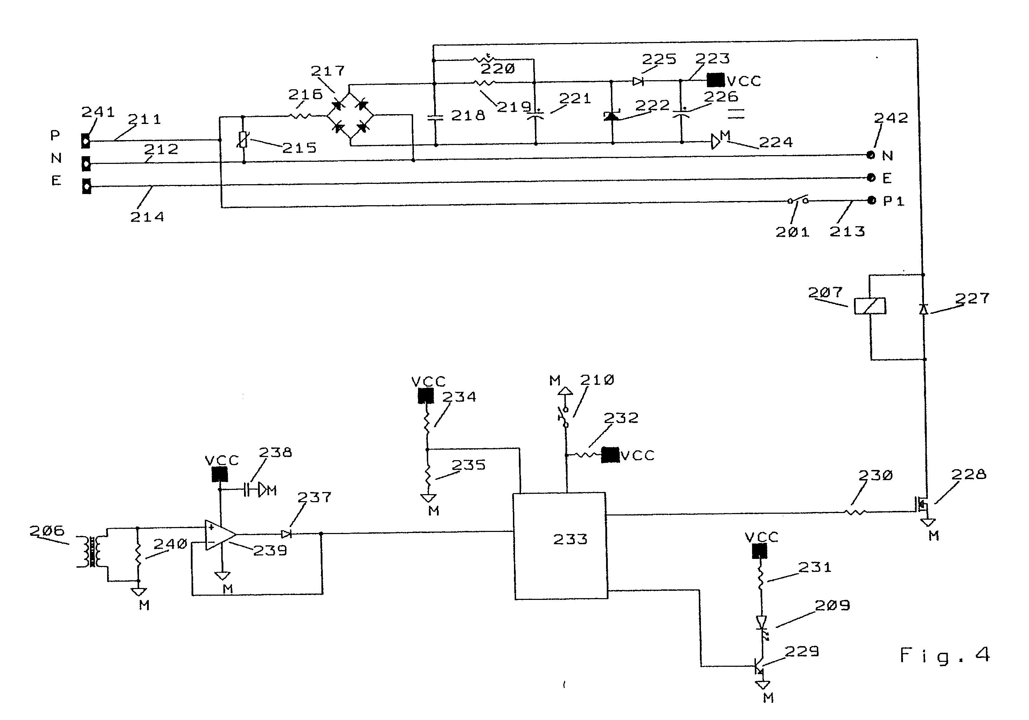

Die Speisung einer elektronischen Sicherheitsschaltung 208, welche über eine Spannungsregelung 215-226 (Fig. 4) verfügt, erfolgt mit der Phase P eines abzweigenden Wechselstromleiters 211.

Der Stromwandler 206, ein Messglied, speist schwache Signale in einen Verstärker 239 ein, welcher die verstärkten und gleichgerichteten Messignale direkt in einen Prozessor 233 leitet. Die verstärkten Messignale werden im Prozessor 233 mit Software ausgewertet, welche die zur Ueberbrük-

kung des starken Stromanstiegs beim Einschalten notwendigen Signale sendet.

Mit einer Taste 210 lässt sich der Sollwert im Betrieb der Anlage, der Grenzwert, einstellen.

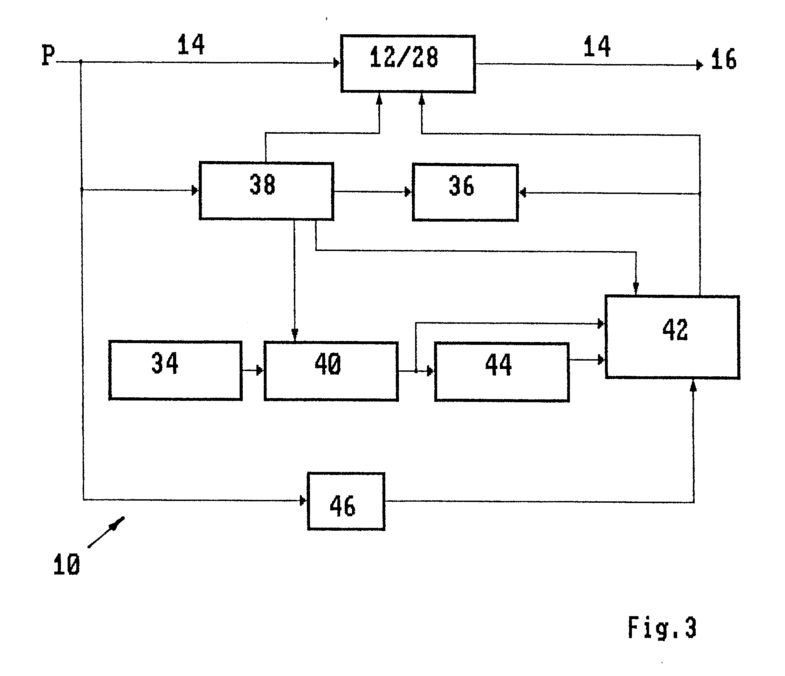

Die Speisung einer in Fig. 3 dargestellten elektronischen Sicherheitsschaltung 10 ohne Prozessor, welche über einen Spannungsregler 38 verfügt, erfolgt mit der Phase P eines abzweigenden Wechselstromleiters 14. Dieser Leiter 14 kann durch ein Relais 28 mit einem Relaiskontakt 12 unterbrochen werden. Er führt zum Transformator 16. Der Wechselstromleiter 14 ist am Spannungsregler 38 angeschlossen.

Der Stromwandler 34 speist schwache Signale in eine Signalaufbereitung 40 ein, welche die verstärkten und gleichgerichteten Messignale direkt in einen Komparator 42 leitet. Die verstärkten Messignale werden zusätzlich in einen Grenzwertbildner 44 weitergegeben. Ebenfalls in den Komparator 42 geleitet werden Signale einer Resetschaltung 46, welche die zur Ueberbrückung des Stromanstiegs beim Einschalten notwendigen Signale sendet.

Die Signalaufbereitung 40 umfasst, in dem Fachmann bekannter Weise geschaltet, einen Verstärker und Gleichrichter, der Grenzwertbildner 44 einen Spannungsfolger mit die verstärkten und gleichgerichteten Messignale verzögernden Bauteilen, beispielsweise einem Widerstand und einem an der Masse hängenden Kondensator, die Resetschaltung 46 einen Optokoppler mit direkt von der abschaltbaren Phase gespeisten Leuchtdioden und einem vom Spannungsregler 38 gespeisten Phototransistor mit nachgeschaltetem Verstärker.

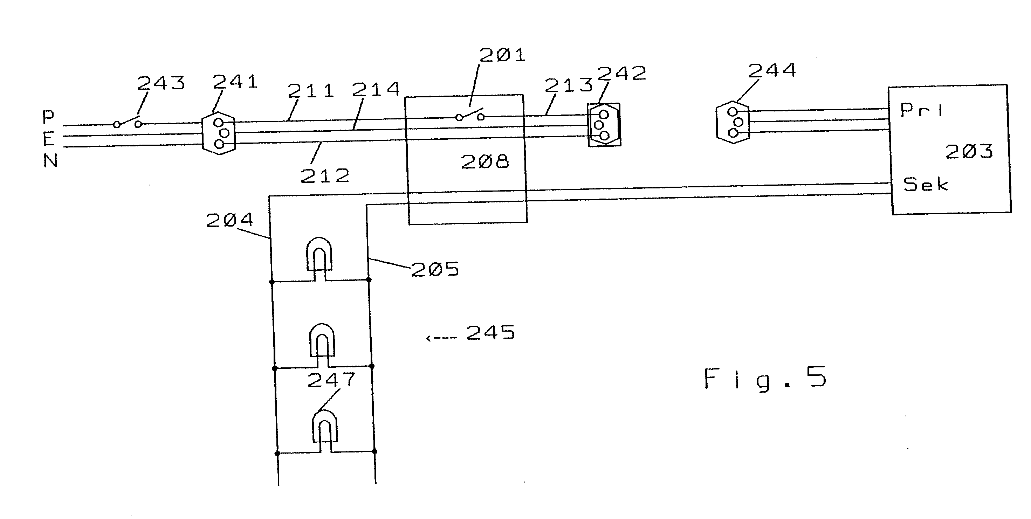

Die eine elektronische Sicherheitsschaltung 208 mit einem Prozessor im Detail darstellende Fig. 4 zeigt ein Ausführungsbeispiel für einen Halogen-Trafo. Ein flacher Dreipolstecker 241 mit Kabel (Phase P, Neutralleiter N und Erdleiter E) dient dem Anschluss an der gedruckten Schaltung und an der Steckdose 242 ohne Kabel. Mit der vom Dimmer oder Anlageschalter zugeleiteten und vom Sicherheitsschalter geschalteten Phase $P_1$ wird der Verbraucher über Gerätestecker 244 (Fig. 5) angeschlossen, Neutralleiter N und Erdleiter E bleiben.

Die Phase P speist die Spannungsregelung 215-226, wie in Fig. 4 gezeigt. Die als Speiseeinheit für die elektronische Sicherheitsschaltung 208 dienende Spannungsregelung 215-226 erzeugt aus dem 220 VAC-Netzstrom oder Dimmer VAC-Netzstrom ein 5 VDC Speisespannung.

Die an sich bekannte Spannungsregelung umfasst einen Varistor 215 als Eingangsüberspannungsschutz, einen einem Gleichrichter 217 vorgeschalteten Strombegrenzungswiderstand 216, Glättungskondensatoren 218, 221 und 226, Widerstände 219 und 220 für einen konstanten Speisespannungs strom, eine Zenerdiode 222 als Spannungsbegrenzung der Speisespannung und eine Diode 225 gegen Rückentladestrom.

Ein Leiter 223 speist den Gleichstrom an den jeweils mit VCC bezeichneten Stellen in die gedruckte Schaltung ein, der Leiter 224 ist mit der durch ein Dreieck dargestellten internen Masse M verbunden.

Der Relaiskontakt 201 hat im vorliegenden Fall eine Leistungscharakteristik von 380 VAC/16A/64A.

Der Sekundärleiter 205 des Transformators 203 wird, aus Fig. 1, 5 ersichtlich, durch die Oeffnung des spiralförmig entlang eines Rings gewickelten Stromwandlers 206 geführt. Dieser umfasst etwa 600 Windungen. An einem Bürdewiderstand 240 fällt eine dem induzierten Strom proportionale Spannung an. Die schwachen Signale von einigen Millivolt werden von einem Verstärker 239 dem Prozessor 233 eingespeist. Das vom Stromwandler 206 erzeugte, verstärkte Signal wird mit Dioden 237 gleichgerichtet. Das derart entstandene Signal ist das Messignal. Mit 238 ist der Koppelkondensator des Verstärkers 239 bezeichnet.

Dieses erzeugte Messignal wird vom Prozessor 233 mit entsprechender Software ausgewertet.

Das über die Widerstände 234,235 entstehende Referenzsignal wird dem Prozessor 233 zugeführt und bildet den Bezugswert für die Berechnungen.

Der Widerstand 232 dient mit der Taste 210 dem Festhalten des Sollwerts im Betrieb der Anlage.

Der Prozessor 233 steuert über einen Transistor 228 das Relais 207 an, solange sich das Messignal nur langsam ändert und den vorgegebenen Maximalwert nicht überschreitet.

Wird der vorgegebene Maximalwert für die Stromerhöhung erreicht und/oder überschritten, so steuert der Prozessor 233 - unabhängig vom Grenzwert für die maximale Stromstärke -über einen Widerstand 231 und einen Transistor 229 die Leuchtdiode 209 an. Der Transistor 228 wird gesperrt, das Relais 207 fällt ab und öffnet den Relaiskontakt 201. Der Transformator und/oder der Verbraucher wird dadurch vom Netz getrennt, wobei ein Störfall von der Leuchtdiode 209 angezeigt wird. Eine Diode 227 dient als Freilaufdiode für das Relais 207 und schützt den Transistor 228.

Die Schaltung bleibt im Störzustand, bis sie durch Aus- und Wiedereinschalten der Anlage zurückgestellt wird. Sollte der vorgegebene Grenzwert immer noch überschritten sein, schaltet die Anlage wieder aus.

Beim Einschalten der Anlage wird das einen starken Stromanstieg anzeigende Messignal durch den Prozessor 233, während höchstens etwa 1 sec, überbrückt. Dadurch zieht das Relais 207 an, der Relaiskontakt 201 wird geschlossen und bringt die Netzspannung an den Transformator und/oder den Verbraucher. Die Anlage ist in Betrieb.

Fig. 5 zeigt den Einbau einer elektronischen Sicherheitsschaltung 208 mit einem Relaiskontakt 201 in eine Installation. Die einer Steckdose entnommene Phase P wird über einen Anlageschalter 243 oder Dimmer zur Unterbrechung des Wechselstromleiters 211 der elektronischen Sicherheitsschaltung 208 zugeführt. Der Transformator 203 ist je nach Schutzklasse geerdet oder nicht.

Der eigentliche Verbraucher 245 ist am Sekundärkreis des Transformators 203 angeschlossen. Selbstverständlich kann anstelle eines Transformators 203 ein Verbraucher direkt an die Sicherheitsschaltung 208 angeschlossen sein.

Die Sicherheitsschaltung 208 kann in das Transformator- oder Verbrauchergehäuse integriert sein oder ein separates Gehäuse haben.

Der Verbraucher 245 besteht aus einem oder hier dargestellt, aus mehreren Beleuchtungskörpern 247. In diesem Fall sind Schalter und Dimmer zweckmässig kombiniert.

Der Wechselstromleiter 211 wird durch den Anlageschalter 243 ausser Betrieb gesetzt, manuell oder programmgesteuert. Der Relaiskontakt 201 unterbricht den Wechselstromleiter 211 nur im Störfall, bei eingeschalteter Anlage.

## Ansprüche

1. Elektronische Sicherheitsschaltung (10,208) mit einem Relaiskontakt (12,201) zum Unterbrechen eines elektrischen Wechselstromleiters (14,211) beim Ueberschreiten eines wählbar festgelegten Grenzwerts, wobei die Sicherheitsschaltung (10,208) von einer Spannungsregelung (38,215-226) gespeist ist, dadurch gekennzeichnet, dass die Sicherheitsschaltung (10,208) Mittel zum Oeffnen des Relaiskontaktes (12,201) bei einem festgelegten schnellen Anstieg des errechneten oder gleichgerichteten Mittelwerts des Stroms auch unterhalb des Grenzwerts umfasst, wobei ein Prozessor (233) oder eine Resetschaltung (46) die erwähnten Mittel beim Einschalten des Geräts überbrückt.

2. Sicherheitsschaltung nach Anspruch 1, dadurch gekennzeichnet, dass die Mittel zur Betätigung bei einem Anstieg des errechneten oder gleichgerichteten Mittelwerts des Stroms von wenigstens 1 A/sec, vorzugsweise wenigstens 10 A/sec, insbesondere wenigstens 30 A/sec, auslösbar sind.

3. Sicherheitsschaltung nach Anspruch 1 oder 2, dadurch gekennzeichnet, dass eine Leuchtdiode (36,209) angeschlossen ist, welche beim Unterbrechen des elektrischen Leiters (14,211) durch den Relaiskontakt (12,201) aufleuchtet, vorzugsweise bis zum Ausschalten eines Anlageschalters (243).

4. Sicherheitsschalter nach einem der Ansprüche 1 - 3, dadurch gekennzeichnet, dass die Mittel zur Betätigung im wesentlichen ein Signale erzeugendes Messglied (206) mit einem Verstärker (239) und einem Gleichrichter (237), einen Prozessor (233) und ein Relais (207) mit einem Relaiskontakt (201) umfassen.

5. Sicherheitsschalter nach einem der Ansprüche 1 - 3, dadurch gekennzeichnet, dass die Mittel zur Betätigung im wesentlichen ein Signale erzeugendes Messglied (34), eine Signalaufbereitung (40) mit einem Verstärker und Gleichrichtern, einen Grenzwertbildner (44) mit einem Spannungsfolger, einen Komparator (42) für den Vergleich der von der Resetschaltung (46), dem Messglied (34) und dem Grenzwertbildner (44) erzeugten Signale und ein Relais (28) mit einem Relaiskontakt (12) umfassen.

6. Sicherheitsschalter nach Anspruch 5, dadurch gekennzeichnet, dass die Resetschaltung (46) einen Optokoppler mit direkt von der abschaltbaren Phase gespeisten Leuchtdioden und einem vom Spannungsregler (38) gespeisten Phototransistor mit nachgeschaltetem Verstärker umfasst.

7. Sicherheitsschalter nach Anspruch 5 oder 6, dadurch gekennzeichnet, dass der Grenzwertbildner (44) dem Spannungsfolger vorgeschaltete, die verstärkten und gleichgerichteten Messignale verzögernde Bauteile, vorzugsweise einen Widerstand und einen an die Masse geschalteten Kondensator, enthält.

8. Sicherheitsschalter nach einem der Ansprüche 4 - 7, dadurch gekennzeichnet, dass das Messglied (34,206) ein den Wechselstromleiter (14,211) umgebender, spiralförmig entlang eines Ringes gewickelter Stromwandler ist.

9. Sicherheitsschalter nach einem der Ansprüche 4 - 8, dadurch gekennzeichnet, dass der Prozessor (233) oder der Komparator (42) mit einem das Relais (28,207) auslösenden Transistor (228) verbunden ist.

10. Verfahren zum Betrieb einer Vorrichtung nach Anspruch 4, dadurch gekennzeichnet, dass die elektronische Sicherheitsschaltung (208) den Ausschaltwert für den errechneten Mittelwert des Stroms speichert und mit dem Einschaltmesswert vergleicht.

11. Verwendung der Sicherheitsschaltung (10,208) nach einem der Ansprüche 1 - 9 zur primärseitigen Unterbrechung einer Transformatorleitung, wobei ein Stromwandler (34, 206) vorzugsweise den Trafo-Sekundärstrom erfasst.

12. Verwendung des Sicherheitsschalters (10,208) nach Anspruch 11 für einen Transformator (16,203) zur Speisung von Niederspannungs-Halogenlampen (247), welche vorzugsweise auf Schienen oder an Seilen bzw. Drähten montiert sind.

EP 0 412 056 A1

Fig. 1

Fig.2

EP 0 412 056 A1

Fig.3

EP 0 412 056 A1

Fig. 4

EP 0 412 056 A1

Fig. 5

**Europäisches Patentamt**

## EUROPÄISCHER RECHERCHENBERICHT

Nummer der Anmeldung

**EP 90 81 0581**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 095 590 (ROBERT BOSCH)<br>* Seite 3, letzter Absatz - Seite 6, Absatz 1 *<br>– – – | 1,3-5,7-9 | H 02 H 3/44 |
| Y | FR-A-2 410 154 (KLEIN,SCHANZLIN & BECKER)<br>* Seite 2, Zeilen 7 - 32 * * Seite 3, Zeilen 20 - 34 *<br>– – – | 1,3-5,7-9 | |
| A | FR-A-2 294 571 (REGIE AUTONOME DES TRANSPORTS PARISIENS)<br>* Seite 3, Zeilen 17 - 34 *<br>– – – | 2,4,7,8 | |
| A | GB-A-2 205 459 (MIDLAND AUTOMATION LIMITED)<br>* Seite 1, Absätze 2 - 4 *<br>– – – – – | 1,11,12 | |
| | | | **RECHERCHIERTE SACHGEBIETE (Int. Cl.5)**<br><br>H 02 H<br>H 05 B |

Der vorliegende Recherchenbericht wurde für alle Patentansprüche erstellt

| Recherchenort | Abschlußdatum der Recherche | Prüfer |
|---|---|---|
| Den Haag | 30 Oktober 90 | LIBBERECHT L.A. |